# EUROPEAN PATENT SPECIFICATION

(11) **EP 4 554 781 B1**
(45) Date of publication and mention of the grant of the patent: **17.06.2026**
(21) Application number: 23754826.8
(22) Date of filing: 03.07.2023
(51) Int. Cl.: B29C 63/42, B65C 3/06, B29C 63/06, B65B 9/06, B65B 41/16, B65C 3/14, B65B 9/14

(54) **DEVICE FOR ARRANGING A SLEEVE-LIKE COVERING AROUND A PRODUCT AND A SPREADING DEVICE FOR USE THEREIN**
VORRICHTUNG ZUM ANORDNEN EINER HÜLSENFÖRMIGEN ABDECKUNG UM EIN PRODUKT UND EINE DAFÜR VERWENDETE STREUVORRICHTUNG
DISPOSITIF D'AGENCEMENT D'UN REVÊTEMENT DE TYPE MANCHON AUTOUR D'UN PRODUIT ET DISPOSITIF D'ÉTALEMENT DESTINÉ À ÊTRE UTILISÉ DANS CELUI-CI

(30) Priority: 13.07.2022 NL 2032481
(43) Date of publication of application: 21.05.2025
(73) Proprietor: Sleeve Technology B.V., 5753 SV Deurne (NL)
(72) Inventor: VAN DE WEIJER, Antonius Josephus Jasper, 5753 SV Deurne (NL); WEIJERS, Jeroen Johannes Wilmar, 5753 SV Deurne (NL)
(74) Representative: Jilderda, Anne Ayolt
(86) International application number: PCT/IB2023/056880
(87) International publication number: WO 2024/013608

(56) References cited:
- EP-A1- 2 477 896
- EP-B1- 0 109 105
- EP-B1- 2 477 896
- EP-B1- 3 003 867
- WO-A1-2013/183336
- US-A- 5 566 527
- US-A- 6 070 399
- US-B2- 8 146 334

## Description

The present invention relates to a device for arranging a sleeve-like covering around a product, comprising: a spreading device, comprising a spreading element, for receiving a tubular film round the spreading element in a flat, closed state and bringing the tubular film into a deployed, opened state, and a suspension in which the spreading element is receivable, supply means for supplying said tubular film in said flat state to the spreading device and round the spreading element, separating means which are able and configured to separate the covering from the opened tubular film, and discharge means for discharging the sleeve-like covering from the spreading device and arranging it round the product, wherein the spreading element has a supply side, which takes the form of a relatively flat mouth, and a discharge side, and comprises between the supply side and the discharge side a transition piece, wherein the spreading element widens transversely of a main plane of the flat mouth in a direction from the supply side to the discharge side, wherein the spreading element imposes a substantially constant circumference on the tubular film in the direction from the supply side to the discharge side, and the tubular film, when passing over the spreading element for the purpose of the tubular film developing from said flat state to said opened state, provides in the main plane of the flat mouth a path of at least the same length, and preferably at least substantially the same length, as in a central perpendicular plane transversely thereof, wherein the suspension comprises a first set of driven transport rollers and a second set of driven transport rollers which are able and configured to carry the tubular film over the spreading element in a direction from the supply side to the discharge side, wherein the spreading element comprises in the transition area a first set of film guides and, in the main plane of the flat mouth, supports thereby on either side on the first set of transport rollers, and wherein the spreading element comprises beyond the transition area a second set of film guides and, in the main plane of the flat mouth, supports thereby on either side on the second set of transport rollers. The invention moreover relates to a spreading device for use in such a device for arranging a sleeve-like covering around a product.

A device and spreading device of the type described in the preamble are known from European patent application EP 2.477896. The known device is used mainly to arrange a socalled shrink film round a product in order to give it a desired appearance. Such a film is usually supplied in great length on a roll and in a flat state, and must be opened before the film can be arranged over the product. With a view thereto the device according to the invention provides a spreading device with a spreading element over which the tubular film develops from the original flat state to the sleeve-like opened state.

The spreading device is suspended releasably in the suspending means and the tubular film is fed between the transport rollers and the film guides as it passes over the spreading element. With a view to varying dimensions of the products to be covered, a collection of spreading elements is usually provided which can each be utilized for a determined circumference of a product to be covered, usually referred to as flat size. When switching from the product to a product with a different circumference, this allows for switching to this other outer circumference by removing the current spreading element and replacing it with one for the new flat size.

The known device however has the drawback that exchanging the spreading elements is relatively difficult therein due to a lack of free passage. In order to give the path of the film over the spreading element in the main plane of the flat mouth in the transition area more length, while the corresponding path length in a direction transversely thereto increases as a result of the spreading element widening here, the first transport rollers together with the first film guides are placed relatively far inward in the known device. The tail of the spreading element is thereby in particular wider than the mutual distance between the first transport rollers, so that the spreading element cannot be removed linearly therethrough. Due to this narrowing of the spreading element, the tubular film moreover has a relatively large amount of excess at the position of the first transport rollers, whereby the tubular film runs the risk of being folded over between the first transport rollers and first film guides acting thereon. In that case the device must be taken out of operation temporarily in order to remedy the situation, which uses valuable production time.

The present invention has for its object, among others, to provide a device of the type described in the preamble which is significantly more practical and reliable.

In order to achieve the stated object a device of the type described in the preamble has the feature according to the invention that the spreading element comprises a narrowing in the transition area between the first set of transport rollers and the second set of transport rollers in the main plane of the flat mouth, that the suspension comprises at the position of the narrowing between the first set of transport rollers and the second of transport rollers a third set of opposite film guides, that the third set of film guides is able and configured to enter into the narrowing from opposite sides in order to guide the tubular film inward into the narrowing, and that the second set of transport rollers maintains a mutual distance which is at most equal to a corresponding mutual distance between the first set of transport rollers.

The spreading device, in contact with the spreading element, thus provides not only the first and second set of transport rollers, but also a third set of film guides lying therebetween. This intermediate set of film guides urges the tubular film inward into the narrowing and thus imposes in this plane an additional length on the path of the tubular film so as to thereby at least keep pace with the increasing length of the path in a direction transversely thereof. It has also been found that the third set of film guides pulls any fold which may still be present in the previously flat tubular film out of the material. The first transport rollers and first film guides thereby need not provide this additional path length and, as a result, can lie further apart.

The setup can thereby particularly be configured such that the distance between the first transport rollers is at least equal to that between the second transport rollers. This ensures free passage of (the tail of) the spreading element between the first set of transport rollers so that the spreading element can be removed at least substantially linearly. The spreading element can thereby be exchanged for a different flat size more rapidly and easily. By exchanging the spreading element in the device, the device can be scaled to a product with a greater or smaller circumference in rapid and accurate manner. A particular embodiment of the device according to the invention has the feature here that the narrowing comprises a recess in a wall of the spreading element.

If a spreading element is exchanged for a spreading element for a different flat size it is desirable for the third set of film guides to be adjustable thereto. A further preferred embodiment of the device according to the invention therefore has the feature that the third set of film guides is adjustable, particularly in a width direction in the main plane of the flat mouth.

In order to enable a rapid and reliable adjustment of the third set of film guides a particular embodiment of the device has the feature according to the invention that the film guides of the third set of film guides are each carried by an actuator, particularly a linear actuator, a maximum stroke of which is limited by a setting device. The setting device here imposes a final position of the film guide coupled thereto. This final position must be the same on both sides for correct operation of the device. In order to prevent malfunction a further particular embodiment of the device according to the invention therefore has the feature that setting devices of the actuators are electronically coupled to a central control device, and that in the event of an unequal setting between the film guides of the third set of film guides the central control device generates an error message which interrupts operation of the device.

The transport rollers provide for transport of the tubular film over the spreading element. It is important here to prevent slipping and stretch in the film as a result of a mutual difference in drive speed between the transport rollers. With a view thereto a further preferred embodiment of the device has the feature according to the invention that provided between the first transport rollers and the second transport rollers is a direct transmission which synchronizes their rotation. The thus provided direct transmission provides for an exact synchronization of the transport rollers driven thereby. The transition in question can be realized in various ways. A further particular embodiment of the device according to the invention is characterized in this respect in that the transmission comprises a direct belt transmission or chain or gear transmission with a transmission ratio of one.

The film guides preferably impart a minimal resistance and friction to the tubular film being carried therealong. For this purpose a contact surface with the film can be embodied from a material with a low friction coefficient. A further preferred embodiment of the device according to the invention is however characterized in that the film guides comprise guide rollers with mutually parallel rotation axes, parallel to respective rotation axes of the transport rollers. The guide rollers which are here applied for one or more and preferably for each of the sets of film guides are particularly suspended, more particularly bearing-mounted, for free rotation about their rotation axis so as to automatically take on the same peripheral speed as the driven transport rollers.

In order to enhance a lateral stability of the suspension of the spreading element in the spreading device a further preferred embodiment of the device has the feature according to the invention that the transport rollers of at least one of the first set of transport rollers and the second set of transport rollers comprise in their running surface a central recess, particularly a groove, in which the film guides co-acting therewith are received.

The invention also relates to a spreading device for use in one or more of the above described embodiments of the device according to the invention and will be further elucidated here with reference to a drawing. In the drawing:
- Figure 1: is a schematic representation of an exemplary embodiment of the device according to the invention;
- Figure 2: is a cross-section of the spreading device of the device of figure 1 in the main plane of the flat mouth of the spreading element;
- Figure 3: is a cross-section of the spreading element of the device of figure 1 transversely of the main plane of the flat mouth of the spreading element; and
- Figure 4: is an isometric view of the suspension of the spreading device of figure 2.

It is otherwise noted here that the figures are purely schematic and not always drawn to (the same) scale. Some dimensions in particular may be exaggerated to greater or lesser extent for the sake of clarity. Corresponding parts are designated in the figures with the same reference numeral.

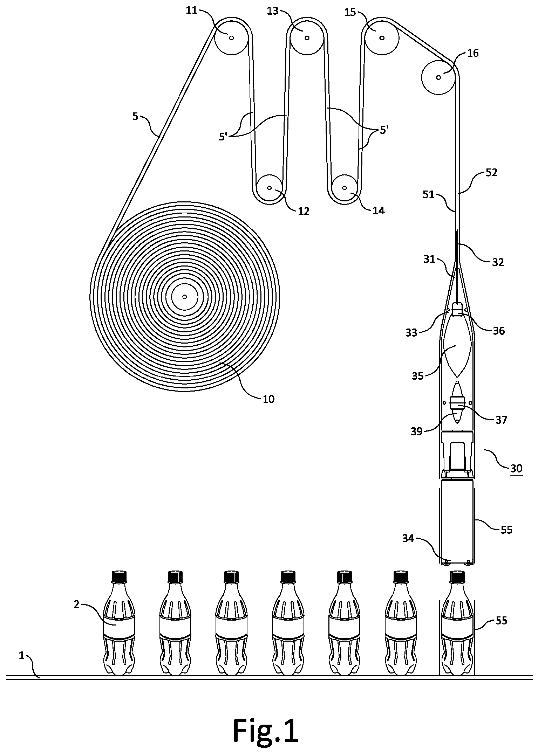

In the device shown in figure 1 a tubular film 5 of a plastic shrink film is supplied on roll 10. Tubular film 5 lies thereon in a flat, folded state without any gap between a back film and a top film of the supplied tubular film. By opening up the film a seamless sleeve-like covering 55 can be formed therefrom, which can be shrunk tightly round a product 2 by applying heat. In this embodiment these are bottles 2 which are continuously supplied on an endless belt 1. The device is however also suitable for any number of other shapes and dimensions of product, wherein a width of the tubular film in particular will always be adapted to a circumference of the product to be covered.

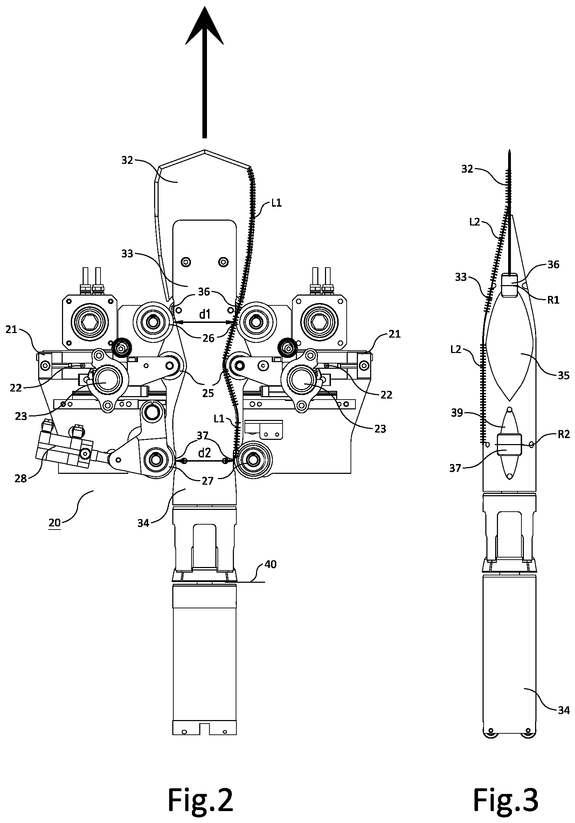

The device can comprise one or more of such rolls 10 of tubular film, together with means (not shown here) for connecting a tail of a roll in use at that moment to a head end of a subsequent roll without interrupting operation of the device, in order to thus realize continuation of the process. For this purpose a roller assembly 11-16 provides several lengths 5' of tubular film which can be utilized as buffer length during a roll switch. Roller assembly 11-16 is spring-mounted and moreover keeps the tubular film under a constant tension. Tubular film 5 is fed via a guide 16 of the roller assembly to a spreading element 30 of a spreading device 20, of which only the spreading element 30 is shown in figure 1 for the sake of clarity, but which is shown more fully in figures 2-5.

The spreading element 30 comprises on a supply side 31 a mouth 32 which extends mainly in the main plane shown in figure 2, but is relatively level and flat transversely thereof, as drawn in figure 1 and figure 3. Owing to this flat configuration, the tubular film can be received thereon in a state in which it is still almost closed, such that the top film 51 and the back film 52 fall thereover on opposite sides as illustrated in figure 1. The designations "back" and "top" need here otherwise not be given any particular individual definition, and these terms are used solely to designate the different sides of the tubular film.

Tubular film 5 is carried over spreading element 30 during operation and leaves the spreading element in open state on a discharge side 34. For this purpose spreading element 30 comprises between supply side 32 and discharge side 34 a transition piece 33 in which the spreading element gradually widens transversely of the main plane of figure 2, as shown in figure 3. Adjacently of flat mouth 32 the spreading element comprises a first set of film guides 36 which, as seen in the main plane of the flat mouth, are arranged on either side of the spreading element. A second set of film guides 37 is provided beyond the transition area 33. The film guides 36, 37 here comprise in each case guide rollers which are arranged partially countersunk in respective recesses in the spreading element and are mounted therein for free rotation about their rotation axis R1, R2.

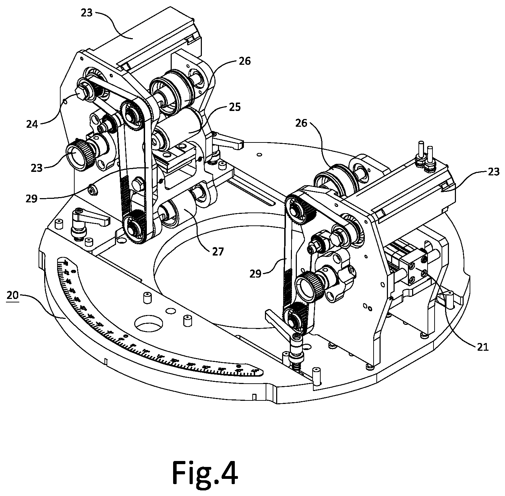

As shown in figure 2, spreading element 30 is suspended removably in a suspension 20, see also figure 4, which comprises at the position of the first and second set of film guides 36, 37 respectively a first set of transport rollers 26 and a second set of transport rollers 27. Under the influence of its weight the spreading element 30 rests with the first set of film guides 36 on the first set of transport rollers 26, and tubular film 5 passes therebetween while tubular film 5 unfolds over spreading element 30. As shown in figure 4, first transport rollers 26 comprise a central recess. First film guides 37 are received and confined in this recess for the purpose of an increased lateral stability of the suspension.

Beyond transition piece 33 the tubular film 5 runs between the second set of film guides 37 and second set of transport rollers 27, which carry tubular film 5 distally on to the tail 34 of spreading element 30. The second transport rollers 27 support downward on the second guide rollers 37 and thus confine the spreading element between the two sets of transport rollers 26, 27. One of the two second transport rollers 27 is here fixedly disposed, while the opposite transport roller 27 (on the left in figure 2) is carried by an actuator 28 whereby transport roller 27 exerts a light pressure on spreading element 30.

On each of the two sides of spreading element 30 the transport rollers 26, 27 are mutually coupled via a direct transmission in the form of a toothed belt 29 which is driven by an output shaft 24 of an electric motor 23, see figure 4. This transmission ensures that the two thus driven transport rollers 26, 27 rotate at exactly the same peripheral speed.

From flat mouth 32, spreading element 30 imposes on tubular film 5 an at least substantially constant circumference around spreading element 30. As shown in figures 2 and 3, the spreading element comprises locally, at the position of transition area 33, a narrowing 35 in the form of a recess arranged in the wall of the spreading element. The spreading element is thereby designed such that a first distance L1 travelled thereover by the film between the first set of transport rollers 26 in the main plane of flat mouth 32 will not be smaller than a corresponding second distance L2 in the central perpendicular plane transversely thereof, see figures 2 and 3. For this purpose a third set of film guides 25 is provided, likewise in the form of guide rollers, which guide the tubular film 5 laterally into the local narrowing 35 in spreading element 30 and so create more path length for the tubular film in this plane. Any fold which had formed in the tubular film in the flat state on roll 10 and which may still be present is furthermore removed from tubular film 5 thereby.

In order to be able to adjust the position of the third set of guide rollers 25 to the dimensions of spreading element 30 when exchanging the spreading element for a larger or smaller one, guide rollers 25 are laterally adjustable. For this purpose the guide rollers 25 each feature a linear actuator 21 which is mounted in spreading device 20 and which will drive the relevant guide roller 25 inward in the width direction of the spreading element when energized. Provided on the output shaft of actuator 21 is a protrusion 22 which serves as stop which is received in a selected cavity of a setting wheel 23 which is manually adjustable. A maximum stroke of each actuator 21 is thus limited by the position of setting wheel 23, this position corresponding to a selected spreading element. The two setting wheels 23 are coupled to a central control of the device which releases the spreading device only if both setting wheel 23 have taken on the same position, this in order to avoid any malfunction of the device.

Owing to the effect of and film guiding by the third set of film guides 25, transport wheels 26 and film guides 36 of the first sets can lie further apart without the path length of the film being smaller in this plane than in the plane transversely thereto. The first set of transport wheels 26 can thus particularly lie further apart in order to maintain a mutual distance d1 which is at least equal to the mutual distance and therefore the width of the spreading element between the second set of transport wheels 27. Spreading element 30 can thereby be removed almost linearly in particularly practical manner after actuators 21 have retracted the third set of guide rollers. This facilitates a possible switch of spreading element and entails less risk of damage. For the purpose of lowering a rolling resistance all guide rollers are in this embodiment bearing-mounted and oriented with their rotation axes in the same direction as the driven transport rollers so that tubular film 5 experiences as little slipping as possible.

At the bottom of the table shown in figure 4 the spreading device 20 comprises separating means (not shown) in the form of a driven ring cutter 40, see figure 2, which cuts a sleeve-like covering 55, see figure 1, precisely to the intended length all the way around and thus separates it from tubular film 5. Transport wheels (not shown) in the tail of the spreading device carry the thus formed covering round product 1 and out of the device.

Although the invention has been further elucidated above with reference to only a single exemplary embodiment, it will be apparent that the invention is by no means limited thereto. On the contrary, many variations and embodiments are still possible within the scope of the invention as defined by the appended claims.

## Claims

1. Device for arranging a sleeve-like covering around a product (2), comprising:
- a spreading device (20), comprising a spreading element (30), for receiving a tubular film (5) round the spreading element (30) in a flat, closed state and bringing the tubular film (5) into a deployed, opened state, and a suspension in which the spreading element (30) is receivable,
- supply means for supplying said tubular film (5) in said flat state to the spreading device (20) and round the spreading element (30),
- separating means which are able and configured to separate the covering from the opened tubular film (5), and
- discharge means for discharging the sleeve-like covering from the spreading device (20) and arranging it round the product (2),
wherein the spreading element (30) has a supply side (31), which takes the form of a relatively flat mouth (32), and a discharge side (34), and comprises between the supply side (31) and the discharge side (34) a transition piece, wherein the spreading element (30) widens transversely of a main plane of the flat mouth (32) in a direction from the supply side (31) to the discharge side (34),
wherein the spreading element (30) imposes a substantially constant circumference on the tubular film (5) in the direction from the supply side (31) to the discharge side (34), and the tubular film (5), when passing over the spreading element (30) for the purpose of the tubular film (5) developing from said flat state to said opened state, provides in the main plane of the flat mouth (32) a path of at least the same length, and preferably at least substantially the same length, as in a central perpendicular plane transversely thereof,
wherein the suspension comprises a first set of driven transport rollers (26) and a second set of driven transport rollers (27) which are able and configured to carry the tubular film (5) over the spreading element (30) in a direction from the supply side (31) to the discharge side (34),
wherein the spreading element (30) comprises in the transition area a first set of film guides (36) and, in the main plane of the flat mouth (32), supports thereby on either side on the first set of transport rollers (26), and
wherein the spreading element (30) comprises beyond the transition area a second set of film guides (37) and, in the main plane of the flat mouth (32), supports thereby **on** either side on the second set of transport rollers (27), **characterized in that**
the spreading element (30) comprises a narrowing in the transition area between the first set of transport rollers (26) and the second set of transport rollers (27) in the main plane of the flat mouth (32),
the suspension comprises at the position of the narrowing between the first set of transport rollers (26) and the second of transport rollers (27) a third set of opposite film guides (25),
the third set of film guides (25) is able and configured to enter into the narrowing from opposite sides in order to guide the tubular film (5) inward into the narrowing, and
the second set of transport rollers (27) maintains a mutual distance which is at most equal to a corresponding mutual distance between the first set of transport rollers (26).

2. Device according to claim 1, **characterized in that** the narrowing comprises a recess in a wall of the spreading element (30).

3. Device according to claim 1 or 2, **characterized in that** the third set of film guides (25) is adjustable, particularly in a width direction in the main plane of the flat mouth (32).

4. Device according to claim 3, **characterized in that** the film guides of the third set of film guides (25) are each carried by an actuator (21), particularly a linear actuator, a maximum stroke of which is limited by a setting device (23).

5. Device according to claim 4, **characterized in that** setting devices (23) of the actuators (21) are electronically coupled to a central control device, and that in the event of an unequal setting between the film guides of the third set of film guides (25) the central control device generates an error message which interrupts operation of the device.

6. Device according to one or more of the preceding claims, **characterized in that** provided between the first transport rollers (26) and the second transport rollers (27) is a direct transmission (29) which synchronizes their rotation.

7. Device according to claim 6, **characterized in that** the transmission (29) comprises a direct belt transmission or chain or gear transmission with a transmission ratio of one.

8. Device according to one or more of the preceding claims, **characterized in that** the film guides (36,37) comprise guide rollers (26,27) with mutually parallel rotation axes, parallel to respective rotation axes of the transport rollers (26,27).

9. Device according to one or more of the preceding claims, **characterized in that** the transport rollers of at least one of the first set of transport rollers (26) and the second set of transport rollers (27) comprise in their running surface a central recess, particularly a groove, in which the film guides (36,37) co-acting therewith are received.

10. Spreading device (20) as applied in the device according to one or more of the preceding claims.

## Patentansprüche

1. Vorrichtung zum Anordnen einer hüllenartigen Abdeckung um ein Produkt (2), umfassend:
- eine Spreizvorrichtung (20), umfassend ein Spreizelement (30), zum Aufnehmen einer schlauchförmigen Folie (5) um das Spreizelement (30) in einem flachen, geschlossenen Zustand und zum Bringen der schlauchförmigen Folies (5) in einen entfalteten, geöffneten Zustand, und eine Aufhängung, in der das Spreizelement (30) aufnehmbar ist;
- Zuführmittel zum Zuführen der schlauchförmigen Folie (5) in dem flachen Zustand zu der Spreizvorrichtung (20) und um das Spreizelement (30);
- Trennmittel, die fähig und konfiguriert sind, um die Abdeckung von der geöffneten schlauchförmigen Folie (5) zu trennen; und
- Ausgabemittel zum Ausgeben der hüllenartigen Abdeckung von der Spreizvorrichtung (20) und zum Anordnen derselben um das Produkt (2),
wobei das Spreizelement (30) eine Zuführseite (31) aufweist, die die Form eines relativ flachen Mundes (32) hat, und eine Ausgabeseite (34) aufweist, und zwischen der Zuführseite (31) und der Ausgabeseite (34) ein Übergangsstück umfasst, wobei das Spreizelement (30) sich quer zu einer Hauptebene des flachen Mundes (32) in einer Richtung von der Zuführseite (31) zu der Ausgabeseite (34) erweitert,
wobei das Spreizelement (30) der schlauchförmigen Folie (5) einen im Wesentlichen konstanten Umfang in der Richtung von der Zuführseite (31) zu der Ausgabeseite (34) auferlegt, und die schlauchförmige Folie (5), beim Überführen über das Spreizelement (30) zum Zweck des Entwickelns der schlauchförmigen Folie (5) von dem flachen Zustand zu dem geöffneten Zustand, in der Hauptebene des flachen Mundes (32) einen Weg von mindestens der gleichen Länge, und vorzugsweise mindestens im Wesentlichen der gleichen Länge, wie in einer dazu zentral senkrechten Ebene quer dazu bereitstellt,
wobei die Aufhängung einen ersten Satz angetriebener Transportrollen (26) und einen zweiten Satz angetriebener Transportrollen (27) umfasst, die fähig und konfiguriert sind, um die schlauchförmige Folie (5) über das Spreizelement (30) in einer Richtung von der Zuführseite (31) zu der Ausgabeseite (34) zu tragen,
wobei das Spreizelement (30) in dem Übergangsbereich einen ersten Satz Folienführungen (36) umfasst und in der Hauptebene des flachen Mundes (32) dadurch auf beiden Seiten auf dem ersten Satz der Transportrollen (26) abgestützt ist, und
wobei das Spreizelement (30) jenseits des Übergangsbereichs einen zweiten Satz Folienführungen (37) umfasst und in der Hauptebene des flachen Mundes (32) dadurch auf beiden Seiten auf dem zweiten Satz der Transportrollen (27) abgestützt ist, **dadurch gekennzeichnet, dass**
das Spreizelement (30) eine Verengung in dem Übergangsbereich zwischen dem ersten Satz der Transportrollen (26) und dem zweiten Satz der Transportrollen (27) in der Hauptebene des flachen Mundes (32) umfasst,
die Aufhängung an der Position der Verengung zwischen dem ersten Satz der Transportrollen (26) und dem zweiten Satz der Transportrollen (27) einen dritten Satz gegenüberliegender Folienführungen (25) umfasst,
der dritte Satz Folienführungen (25) fähig und konfiguriert ist, um von gegenüberliegenden Seiten in die Verengung einzutreten, um die schlauchförmige Folie (5) nach innen in die Verengung zu führen, und
der zweite Satz der Transportrollen (27) einen gegenseitigen Abstand beibehält, der höchstens gleich ist einem entsprechenden gegenseitigen Abstand zwischen dem ersten Satz der Transportrollen (26).

2. Vorrichtung nach Anspruch 1, **dadurch gekennzeichnet, dass** die Verengung eine Ausnehmung in einer Wand des Spreizelements (30) umfasst.

3. Vorrichtung nach Anspruch 1 oder 2, **dadurch gekennzeichnet, dass** der dritte Satz Folienführungen (25) einstellbar ist, insbesondere in einer Breitenrichtung in der Hauptebene des flachen Mundes (32).

4. Vorrichtung nach Anspruch 3, **dadurch gekennzeichnet, dass** die Folienführungen des dritten Satzes Folienführungen (25) jeweils von einem Aktuator (21) getragen sind, insbesondere einem linearen Aktuator, dessen maximaler Hub durch eine Einstellvorrichtung (23) begrenzt ist.

5. Vorrichtung nach Anspruch 4, **dadurch gekennzeichnet, dass** Einstellvorrichtungen (23) der Aktuatoren (21) elektronisch gekoppelt sind an eine zentrale Steuervorrichtung, und dass im Falle einer ungleichen Einstellung zwischen den Folienführungen des dritten Satzes von Folienführungen (25) die zentrale Steuervorrichtung eine Fehlermeldung erzeugt, die einen Betrieb der Vorrichtung unterbricht.

6. Vorrichtung nach einem oder mehreren der vorhergehenden Ansprüche, **dadurch gekennzeichnet, dass** zwischen den ersten Transportrollen (26) und den zweiten Transportrollen (27) ein direkter Trieb (29) bereitgestellt ist, der deren Rotation synchronisiert.

7. Vorrichtung nach Anspruch 6, **dadurch gekennzeichnet, dass** der Trieb (29) einen direkten Riementrieb oder Kette oder Zahnradgetriebe mit einem Übersetzungsverhältnis von eins umfasst.

8. Vorrichtung nach einem oder mehreren der vorhergehenden Ansprüche, **dadurch gekennzeichnet, dass** die Folienführungen (36, 37) Führungsrollen (26, 27) mit gegenseitig parallelen Rotationsachsen umfassen, parallel zu jeweiligen Rotationsachsen der Transportrollen (26, 27).

9. Vorrichtung nach einem oder mehreren der vorhergehenden Ansprüche, **dadurch gekennzeichnet, dass** die Transportrollen von mindestens einem von dem ersten Satz der Transportrollen (26) und dem zweiten Satz der Transportrollen (27) in ihrer Lauffläche eine zentrale Ausnehmung, insbesondere eine Nut, umfassen, in der die damit zusammenwirkenden Folienführungen (36, 37) aufgenommen sind.

10. Spreizvorrichtung (20), wie verwendet in der Vorrichtung nach einem oder mehreren der vorhergehenden Ansprüche.

## Revendications

1. Dispositif pour disposer une couverture en forme de manchon autour d'un produit (2), comprenant :
- un dispositif d'étalement (20), comprenant un élément d'étalement (30), destiné à recevoir un film tubulaire (5) autour de l'élément d'étalement (30) dans un état plat et fermé et à amener le film tubulaire (5) dans un état déployé et ouvert, et une suspension dans laquelle l'élément d'étalement (30) peut être reçu,
- des moyens d'alimentation pour fournir ledit film tubulaire (5) à l'état plat au dispositif d'étalement (20) et autour de l'élément d'étalement (30),
- des moyens de séparation capables et configurés pour séparer le revêtement du film tubulaire ouvert (5), et
- des moyens de déchargement pour décharger la couverture en forme de manchon à partir du dispositif d'étalement (20) et la disposer autour du produit (2),
l'élément d'étalement (30) possédant un côté d'alimentation (31), qui prend la forme d'une bouche relativement plate (32), et un côté de déchargement (34), et comprenant entre le côté d'alimentation (31) et le côté de déchargement (34) une pièce de transition, l'élément d'étalement (30) s'élargissant transversalement par rapport à un plan principal de la bouche plate (32) dans une direction allant du côté d'alimentation (31) vers le côté de déchargement (34),
l'élément d'étalement (30) imposant une circonférence sensiblement constante au film tubulaire (5) dans la direction allant du côté alimentation (31) au côté de dischargement (34), et le film tubulaire (5), lorsqu'il passe sur l'élément d'étalement (30) afin que le film tubulaire (5) passe de l'état plat à l'état ouvert, présentant dans le plan principal de la bouche plate (32) une trajectoire d'au moins la même longueur, et de préférence d'au moins sensiblement la même longueur, que dans un plan central perpendiculaire transversalement à celui-ci,
la suspension comprenant un premier ensemble de rouleaux de transport entraînés (26) et un deuxième jeu de rouleaux de transport entraînés (27) qui sont capables et configurés pour transporter le film tubulaire (5) sur l'élément d'étalement (30) dans une direction allant du côté de l'alimentation (31) au côté de déchargement (34),
l'élément d'étalement (30) comprenant dans la zone de transition un premier jeu de guides de film (36) et, dans le plan principal de la bouche plate (32), supportant ainsi de chaque côté le premier jeu de rouleaux de transport (26), et
l'élément d'étalement (30) comprenant, au-delà de la zone de transition, un deuxième jeu de guides de film (37) et, dans le plan principal de la bouche plate (32), supportant ainsi de chaque côté le deuxième jeu de rouleaux de transport (27), **caractérisé par le fait que** l'élément d'étalement (30) comprend un rétrécissement dans la zone de transition entre le premier jeu de rouleaux de transport (26) et le deuxième jeu de rouleaux de transport (27) dans le plan principal de la bouche plate (32),
la suspension comprend, à l'endroit du rétrécissement entre la premier jeu de rouleaux de transport (26) et la deuxième jeu de rouleaux de transport (27), une troisième jeu de guides de film opposés (25),
le troisième jeu de guides de film (25) est capable et configuré pour entrer dans le rétrécissement à partir de côtés opposés afin de guider le film tubulaire (5) vers l'intérieur du rétrécissement, et le deuxième jeu de rouleaux de transport (27) maintient une distance mutuelle qui est au plus égale à une distance mutuelle correspondante entre le premier jeu de rouleaux de transport (26).

2. Dispositif selon la revendication 1, **caractérisé par le fait que** le rétrécissement comprend un creux dans une paroi de l'élément d'étalement (30).

3. Dispositif selon la revendication 1 ou 2, **caractérisé par le fait que** le troisième jeu de guides de film (25) est réglable, en particulier dans le sens de la largeur dans le plan principal de la bouche plate (32).

4. Dispositif selon la revendication 3, **caractérisé par le fait que** les guides de film du troisième jeu de guides de film (25) sont portés chacun par un actionneur (21), notamment linéaire, dont la course maximale est limitée par un dispositif de réglage (23).

5. Dispositif selon la revendication 4, **caractérisé par le fait que** les dispositifs de réglage (23) des actionneurs (21) sont couplés électroniquement à un dispositif de commande central, et qu'en cas de réglage inégal entre les guides de film du troisième jeu de guides de film (25), le dispositif de commande central génère un message d'erreur qui permet d'interrompre le fonctionnement du dispositif.

6. Dispositif selon l'une ou plusieurs des revendications précédentes, **caractérisé par le fait qu'**entre les premiers rouleaux de transport (26) et les seconds rouleaux de transport (27) se trouve une transmission directe (29) qui permet de synchroniser leur rotation.

7. Dispositif selon la revendication 6, **caractérisé par le fait que** la transmission (29) comprend une transmission directe par courroie ou par chaîne ou par engrenage avec un rapport de transmission de un.

8. Dispositif selon l'une ou plusieurs des revendications précédentes, **caractérisé par le fait que** les guides de film (36,37) comprennent des rouleaux de guidage (26,27) avec des axes de rotation mutuellement parallèles aux axes de rotation respectifs des rouleaux de transport (26,27).

9. Dispositif selon l'une ou plusieurs des revendications précédentes, **caractérisé par le fait que** les rouleaux de transport d'au moins l'un du premier jeu de rouleaux de transport (26) et du deuxième jeu de rouleaux de transport (27) comportent sur leur surface de roulement un creux central, notamment une rainure, dans lequel sont reçus les guides de film (36,37) coopérant avec eux.

10. Dispositif d'étalement (20) tel qu'appliqué dans le dispositif selon l'une ou plusieurs des revendications précédentes.
